(19)

**Europäisches Patentamt**

**European Patent Office**

**Office européen des brevets**

(11) **EP 4 721 904 A1**

(12) **EUROPEAN PATENT APPLICATION**

(43) Date of publication:
08.04.2026 Bulletin 2026/15

(21) Application number: 25204723.8

(22) Date of filing: 25.09.2025

(51) International Patent Classification (IPC):
*B23K 9/095* (2006.01)     *B23K 9/173* (2006.01)

(52) Cooperative Patent Classification (CPC):
B23K 9/173; B23K 9/0953; B23K 9/0956

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: 01.10.2024 US 202418903101

(71) Applicant: The ESAB Group Inc.
North Bethesda, MD 20852 (US)

(72) Inventors:
• JULIUSSON, Lars
  Västra Frölunda (SE)
• LENNARTSSON, Karl
  Göteborg (SE)

(74) Representative: Murgitroyd & Company
165-169 Scotland Street
Glasgow G5 8PL (GB)

(54) **METHOD PERFORMED IN A WELDING SYSTEM THAT SUPPLIES A CURRENT AND A VOLTAGE TO A STICKOUT OF AN ELECTRODE FROM A WELDING TORCH DURING A WELDING PROCESS, AND CORRESPONDING APPARATUS**

(57) The present application relates to a method (400) being performed in a welding system that supplies a current and a voltage to a stickout of an electrode from a welding torch during a welding process comprises sampling (402) the current and the voltage to produce current values and voltage values. The method then computes (404) time derivatives of the current that coincide with the current values, and determines (406) first and second current values of the current values that differ from each other but that coincide with first and second time derivatives that match each other. A delta current between the first and second current values is computed (408), as is (410) a delta voltage based on first and second voltage values of the voltage values that correspond to the first and second current values. A ratio of the delta voltage to the delta current is computed (412) to represent a resistance of the stickout. An apparatus is also provided, where the apparatus comprises a controller configured to perform the aforementioned method (400).

400

FIG.4

## Description

### TECHNICAL FIELD

The present disclosure relates to measuring an electrode stickout resistance during welding.

### BACKGROUND

During a welding process, a welding system advances a consumable welding electrode through a welding torch toward a workpiece. A portion of the welding electrode that extends beyond a contact tip of the welding torch may be referred to as an "electrode stickout." The welding system supplies weld power (including current and voltage) to the electrode stickout to strike an arc on the workpiece. To control the welding process, the welding system measures the current and a voltage representative of an arc voltage via sense points remote from the welding torch and the arc. The measured voltage differs from the arc voltage in part due to a voltage drop over the electrode stickout that arises from the current and a resistance of the electrode stickout (i.e., an electrode stickout resistance). Compensating the measured voltage for the voltage drop across the electrode stickout relies on knowledge of the electrode stickout resistance. Ascertaining the electrode stickout resistance in real-time during the welding process presents a challenge because the length of the electrode stickout varies and is difficult to measure.

### BRIEF DESCRIPTION OF THE DRAWINGS

FIG. 1 is an illustration of an example welding system in which determining an electrode stickout resistance during welding may be implemented.
FIG. 2 shows various example voltages and voltage drops that occur in a weld circuit of the welding system.
FIG. 3 shows high-level operations used to compensate a voltage measured at a power supply of the welding system for the various volage drops of FIG. 2, to produce a compensated voltage that may be used as a proxy for an arc voltage.
FIG. 4 is a flowchart of an example method of determining the electrode stickout resistance performed in the welding system.
FIG. 5 shows example waveforms for weld current and voltage during a short-arc type process and that are sampled for purpose of determining the electrode stickout resistance.
FIG. 6 shows example waveforms for weld current and voltage during a pulse-type process and that are sampled for purpose of determining the electrode stickout resistance.
FIG. 7 is a block diagram of a power supply controller (PSC) (also referred to as a "controller") according to an embodiment.

### DETAILED DESCRIPTION

Overview

In an embodiment, a method performed in a welding system that supplies a current and a voltage to a stickout of an electrode from a welding torch during a welding process comprises: sampling the current and the voltage to produce current values and voltage values; computing time derivatives of the current that coincide with the current values; determining first and second current values of the current values that differ from each other but that coincide with first and second time derivatives that match each other; computing a delta current between the first and second current values; computing a delta voltage based on first and second voltage values of the voltage values that correspond to the first and second current values; and computing a ratio of the delta voltage to the delta current to represent a resistance of the stickout.

Example Embodiments

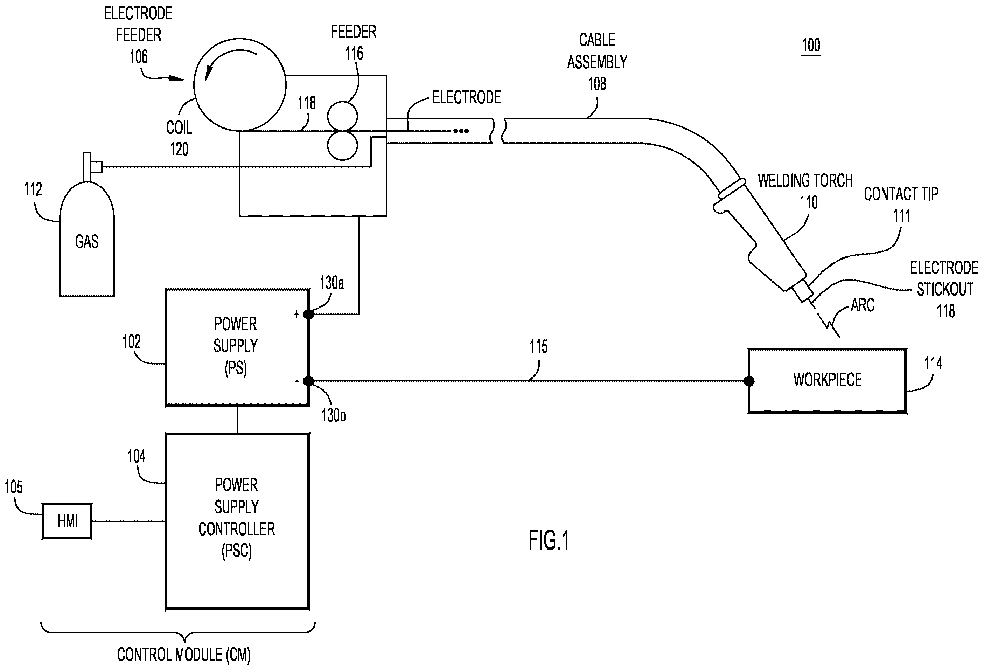

With reference to FIG. 1, there is an illustration of an example metal inert gas (MIG)/metal active gas (MAG) welding system 100 in which determining an electrode stickout resistance during welding may be implemented. The embodiments are presented in the context of MIG/MAG welding by way of example only. It is understood that the embodiments may be employed generally in any known or hereafter developed welding environments, such as, but not limited to, tungsten inert gas (TIG) welding, flux cored arc welding (FCAW), shielded metal arc welding (SMAW) or stick welding, submerged arc welding (SAW), and so on. In the example shown in FIG. 1, welding system 100 includes: a power supply 102; a power supply controller (PSC) 104 coupled to and configured to control the power supply; a human machine interface (HMI) 105 coupled to the PSC and through which a human interacts with and controls the welding system; a wire electrode feeder 106 coupled to the power supply; a cable assembly 108 coupled to the wire electrode feeder 106; a torch 110 coupled to the cable assembly 108 and having a sturdy metal contact tip 111 that extends from an end of the torch 110; a gas container 112 coupled to the cable assembly 108; and a workpiece 114 coupled to the power supply through at least a return path/cable 115. PSC 104 and HMI 105 collectively form a control module CM. In the ensuing description, the terms "weld" and "welding" are synonymous and interchangeable. In the context of arc welding, torch 110 may be referred to as a "welding torch" or "welding gun."

Wire electrode feeder 106 includes a feeder 116 to feed or advance a consumable electrode from a coiled wire electrode 120 through cable assembly 108 and through contact tip 111 of torch 110, which is in electrical contact with the electrode. Under control of PSC 104, power supply 102 generates weld power that drives the welding process/operation. In welding operations that involve a pulsed or periodic waveform, the weld power typically includes a series of weld current pulses. Power supply 102 provides the weld power from an output terminal 130a of the power supply to the wire electrode, through feeder 116, cable assembly 108, and torch 110, while the cable assembly 108 also delivers a shielding gas from gas container 112 to the torch. Return path/cable 115 provides an electrical return path from workpiece 114 to an input terminal 130b of power supply 102. The aforementioned components comprise a circuit path or weld circuit from output terminal 130a to input terminal 130b of power supply 102, through wire electrode feeder 106, cable assembly 108, torch 110, workpiece 114, and return path/cable 115.

The electrode includes a portion or stickout 118 (also referred to as an "electrode stickout") that extends beyond contact tip 111 and a free end of torch 110 near workpiece 114. During a welding operation, a tip of stickout 118 is brought into contact or near contact with workpiece 114, and the weld power (i.e., current and voltage) supplied by power supply 102 to the torch 110 creates an arc between workpiece 114 and the tip. To control the welding process, PSC 104 controls power supply 102 to generate the weld power (e.g., current) at a desired level for the welding process, based on feedback in the form of measurements of the current and voltage (e.g., arc voltage) supplied by the power supply to the welding process.

To this end, welding system 100 includes a current sense point to provide a sensed or measured current i to PSC 104. Current i is indicative of the weld current (and the weld power) supplied to weld torch 110 during a weld operation and when welding system 100 is idle and not actively engaged in the welding operation. Welding system 100 also includes a voltage sense point to provide a sensed or measured voltage u to PSC 104. Voltage u is indicative of the weld voltage (and the weld power) supplied to weld torch 110 during a weld operation and when power supply is welding system 100 is idle and not actively engaged in the welding operation. The current and voltage sense points may be located in power supply 102 and/or remotely from the power supply, such as in cable assembly 108 or torch 110. In the example of FIG. 1, the voltage sense point may be positioned at or near output terminal 130a and/or input terminal 130b. Together, current i and voltage u represent measurements of weld power supplied by power supply 102 to torch 110 for a welding process. That is, together, current i and voltage u represent weld power measurements.

To control the weld power generated by power supply 102, PSC 104 generates and controls (e.g., dynamically adjusts) pulse width modulation (PWM) waveforms 210 based at least in part on the weld power measurements, and applies the PWM waveforms to power supply 102. Power supply 102 may include a power inverter (not shown) that operates under control of PWM waveforms 210, as is known. For example, PSC 104 may increase duty cycles and thus on-times of PWM waveforms 210 applied to the power inverter to increase the weld power, and vice versa. In this way, power supply 102 and PSC 104 implement a feedback control loop to control PWM waveforms 210 based on current i and voltage u.

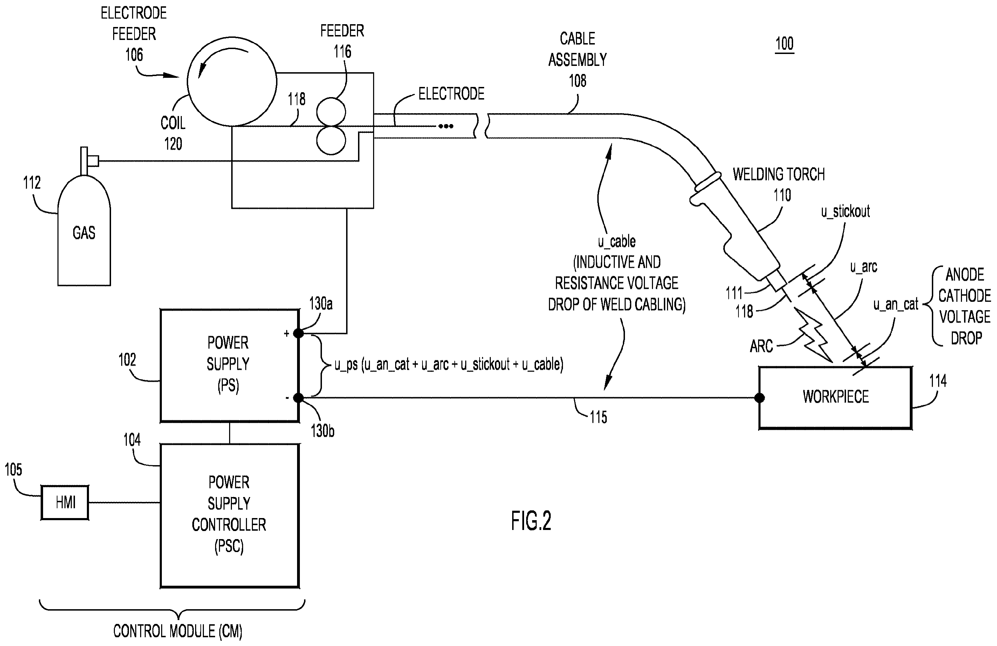

FIG. 2 shows various voltages and voltage drops that occur in the weld circuit of FIG. 1, from output terminal 130a to input terminal 130b of power supply 102, through wire electrode feeder 106, cable assembly 108, torch 110, stickout 118, workpiece 114, and return path/cable 115. The voltages and voltage drops include the following:

a. U_ps: Raw voltage u measured at power supply (ps) output terminal 130a. U_ps represents a raw or uncompensated voltage measurement, meaning that the voltage is not compensated for any of the following voltage drops (b)-(f). U_ps may be used as a proxy for an arc voltage u_arc.

b. U_an_cat (i.e., u_anode_cathode): An "anode-cathode" voltage drop that is present throughout a pulse-type process. U_an_cat is zero in a short-circuit condition on workpiece 114.

c. U_stickout: A voltage drop across stickout 118 due to a resistance R_stickout of the stickout. $U\_stickout = R\_stickout \cdot i$.

d. U_R_cable: A voltage drop across the cable due to a resistance of the cable (i.e., a cable resistance R_cable). $U\_cable = R\_cable \cdot i$.

e. U_L_cable: A voltage drop across the cable due to an inductance of the cable (i.e., a cable inductance L_cable). $U\_L\_cable = L\_cable \cdot di/dt$.

f. U_arc: an arc voltage. U_arc is a function of an arc length and other parameters, such as i.

The raw voltage u_ps (or u) measured at the output of power supply 102 is given by the following equation: u_ps = u_an_cat + u_arc + u_stickout + u_cable (u_L_cable + u_R_cable).

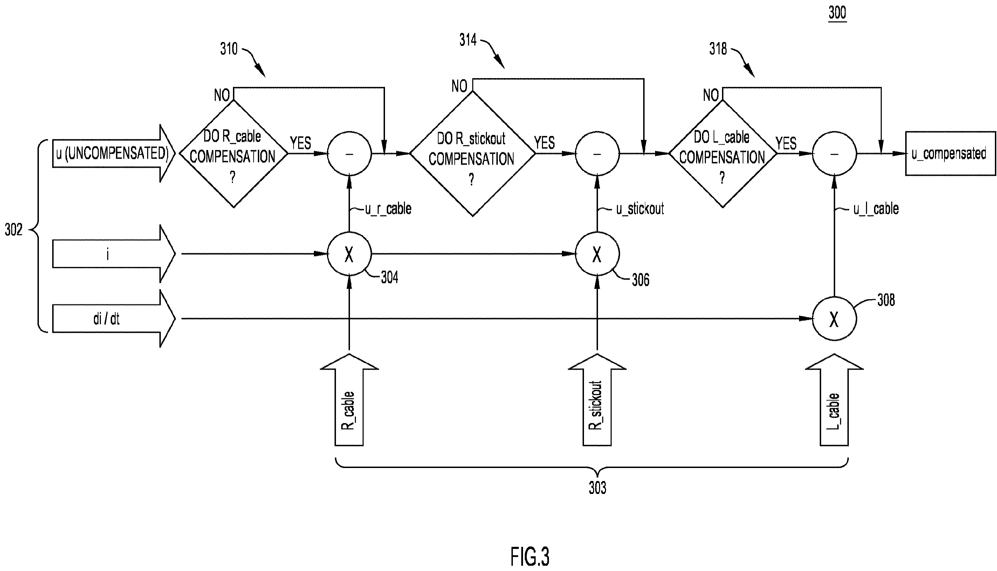

FIG. 3 shows high-level operations 300 used to compensate voltage u_ps for the various volage drops of FIG. 2, to produce a compensated voltage u_compensated. Compensated voltage u_compensated may be used as a proxy for arc voltage u_arc.

302 receives inputs including voltage u_ps and current i, and a computed value for a time derivative of the current di/dt (also referred to as a "current time derivative" or a "current derivative"). 303 receives values for cable resistance R_cable, cable inductance L_cable, and stickout resistance R_stickout. The aforementioned values may be predetermined values or may be computed according to different methods. A method of computing stickout resistance R_stickout and a combined resistance (R_stickout + R_cable) is described below after FIG. 3 is described.

304 multiplies R_cable by i, to produce u_R_cable.

306 multiplies R_stickout by i, to produce u_stickout.

308 multiplies L_cable by di/dt, to produce u_L_cable.

Next operations 310, 314, and 318 optionally compensate u_ps for R_cable (i.e., u_R_cable), R_stickout (i.e., u_stickout), and L_cable (i.e., u_L_cable) in series, to produce a final compensated version of u_ps, denoted "u_compensated."

310 determines whether to compensate u_ps for R_cable. If yes, 310 subtracts u_R_cable from u_ps, to produce a first compensated version of u_ps. If no, 310 passes u_ps to 314. U_ps and the first compensated version of u_ps collectively represent a "first result" passed to 314.

314 determines whether to compensate u_ps for R_stickout. If yes, 314 subtracts u_stickout from the first result (which may be u_ps or the first compensated version of u_ps), to produce a second compensated version of u_ps. If not, 314 simply passes the first result to 318. The second compensated version of u_ps and the first result are collectively referred to as the "second result" passed to 318.

318 determines whether to compensate u_ps for L_cable. If yes, 318 subtracts u_L_cable from the second result, to produce a third compensated version of u_ps. If not, 310 passes the second result. The third compensated version of u_ps and the second result collectively represent a "third result." Assuming at least one compensation action was invoked, the third result represents a final compensated version of u_ps, referred to as "u_compensated."

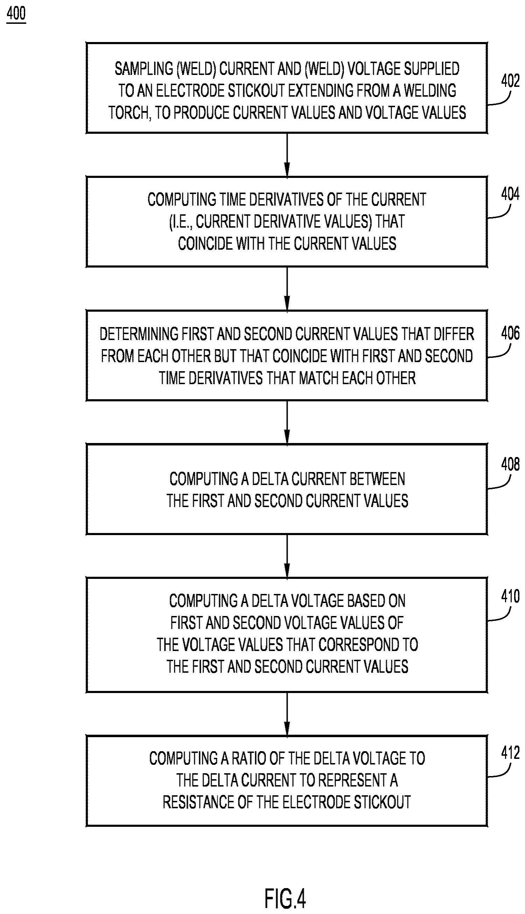

FIG. 4 is a flowchart of an example method 400 of determining stickout resistance R_stickout of stickout 118 performed in welding system 100. Method 400 may be performed primarily by PSC 104.

At 402, PSC 104 monitors weld power across multiple PWM periods. For example, PSC 104 samples current i and voltage u (e.g., u_ps) to produce a sequence of weld power samples p = i, u. For example, the weld samples include p(1) = {u(1), i(1)}, p(2) = {u(2), i(2)}, .. , p(n) = {u(n), (i)(n)}, where 1, 2, .. , n represent successive time indices. The current and voltage values {i(m), u(m)} in each power sample p(m) coincide in time and are said to correspond to each other.

At 404, PSC 104 computes values of a time derivative of the current (di/dt values) that coincide in time with corresponding ones of the current values. Thus, PSC 104 computes a sequence of time derivative values (one per current value) to include di/dt(1), di/dt(2), and so on that coincide in time with corresponding ones of current values i(1), i(2), and so on. In an example, each time derivative value di/dt(m) for current value i(m) (of power sample p(m)) may be computed as a ratio of (i) a difference between first and second current values that straddle current value i(m), and (ii) a difference between first and second times (i.e., current sample times) at which the first and second current values occur. Other techniques for computing the time derivative value are possible.

Table 1 shown below shows example data collected, computed, and stored by 402 and 404. In practice, Table 1 may include many more entries.

Table 1

| time index m | Power p(m) | Current i(m) | Voltage u(m) | Time Derivative di/dt(m) |
|---|---|---|---|---|
| 1 | p(1) | i(1) | u(1) | di/dt(1) |
| 2 | p(2) | i(2) | u(2) | di/dt(2) |
| 3 | p(3) | i(3) | u(3) | di/dt(3) |
| 4 | p(4) | i(4) | u(4) | di/dt(4) |
| 5 | p(5) | i(5) | u(5) | di/dt(5) |

At 406, PSC 104 determines first and second current values that have different values (magnitudes) but matching time derivative values. For example, PSC 104 searches the existing current values and corresponding time derivative values for the following pair of current values: i(x) with coincident di/dt(x), and i(y) with coincident di/dt(y), to satisfy i(x) ≠ i(y), and di/dt(x) ~ di/dt(y). The first and second current values may be required to differ by at least a predetermined tolerance or current value difference threshold. This criterion may be tested and satisfied when comparing the first and second current values to each other indicates that their difference exceeds the predetermined current value difference threshold. Similarly, the time derivatives may be required to match within a predetermined tolerance or time derivative difference range. This criterion may be tested and satisfied when comparing the time derivatives to each other indicates that their difference falls within the predetermined time derivative difference range (i.e., they differ by less than a difference threshold). In the ensuing description, the first current value and the second current value (and their corresponding power samples) may also be referred to as "sample_1" and "sample _2," respectively.

At 408, PSC 104 computes a delta current (value) between the first and second current values. For example, PSC 104 computes delta current $\Delta i = i(y) - i(x)$.

At 410, PSC 104 computes a delta voltage (value) between first and second voltage values that correspond to the first and second current values. For example, PSC 104 computes delta voltage $\Delta u = u(y) - u(x)$.

At 412, PSC 104 computes a ratio of the delta voltage to the delta current. The ratio represents stickout resistance R_stickout, which is proportional to the ratio. For example, PSC 104 computes stickout resistance R_stickout $\alpha$ $\Delta u/\Delta i$. In another example, the ratio may be proportional to a combined stickout resistance and cable resistance, as described below.

PSC 104 may compensate the first and second voltage values using stickout resistance R_stickout to produce first and second compensated voltage values, as described above in connection with FIG. 3. In that case, PSC 104 computes the delta voltage using the compensated first and second voltage values. PSC 104 may further compensate the first and second voltage values to account for one or more of inductive and resistive voltage losses of the cabling that conveys the electrode (and the current and the voltage) to the welding torch, to produce inductive and/or resistive compensated first and second voltage values.

An example analytical basis for determining stickout resistance R_stickout or a combined resistance (R_stickout + R_cable) according to method 400 is now described. As described above, voltage u_ps includes the following voltage contributions:

    a. Resistive contribution: i • (R_cable + R_cable_error + R_stickout).
    b. Inductive contribution: di/dt • (L_cable + L_cable_error + L_stickout).
    c. Voltage contribution: u_arc + u_anode_cathode.

The following computations are performed using the voltage sampled at power supply 102 with inductance and resistance compensation for the cables, where a computational "difference" is denoted "delta_*":

$$\mathrm{delta\_u} = \mathrm{sample\_2} - \mathrm{sample\_1},$$

then

delta_u = delta_i • (R_cable + R_cable_error +R_stickout) + delta_di/dt • (L_cable + L_cable_error + L_stickout) + delta_u_arc + delta_u_anode_cathode.

The following assumptions are made:

    a. L_stickout is small (~10nH) so this term is omitted.
    b. L_cable is the inductance contribution and has been compensated away, so is omitted.
    c. L_cable_error may be several uH. This term is reduced to zero or near zero by choosing matching di/dt values (so that delta_di/dt is small).
    d. R_cable is compensated away, so omitted.
    e. R_cable_error and R_stickout remain.
    f. Delta_u_arc remains.
    g. Delta_anode_cathode is constant and omitted because constant terms are omitted.

From the above equation for delta_u and based on the assumptions, the following terms remain, where strikeouts indicate terms that drop-out due to subtraction:

delta_u = delta_i • (+ R_cable_error + R_stickout) + • (+ L_cable_error + ) + delta_u_arc +, which gives

$$delta\_u = delta\_i \cdot (R\_cable\_error + R\_stickout) + delta\_u\_arc,$$

which gives

$$delta\_u = delta\_i \cdot R\_cable\_error) + delta\_i \cdot R\_stickout + delta\_u\_arc.$$

Assuming delta_u_arc is small (e.g., smaller than a predetermined error tolerance for the set of computations), delta_u_arc is omitted, leaving:

$$Resistance\ (R\_cable\_error,\ R\_stickout) = delta\_u\ /\ delta\_i.$$

The example analysis assumes that delta_u_arc is small and may be omitted from consideration. In another example in which delta_u_arc is larger (i.e., is not so small that it can be ignored), a value of delta_u_arc may be estimated using any known or hereafter developed technique, and the estimated value may be accounted for in the computation of the resistance. Accordingly, the techniques presented herein are equally applicable to cases where delta_u_arc is small and large.

The computation may not separate errors for R_cable from R_stickout, in which case using voltage samples that are uncompensated for R_cable leads to a value of Resistance that includes R_cable and R_stickout. In that case, subtracting R_cable from the Resistance leaves R_stickout.

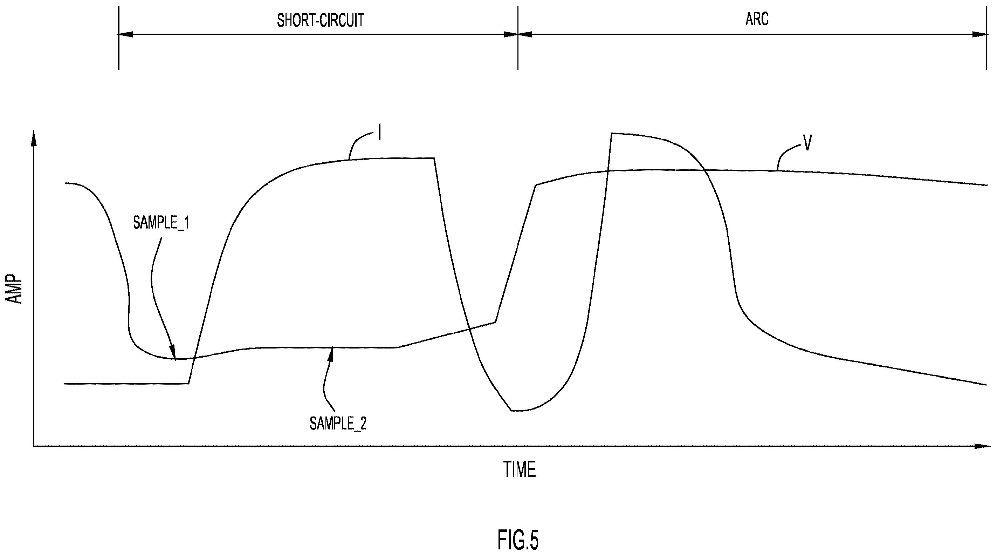

FIG. 5 shows example waveforms for weld current I and weld voltage V (true arc voltage) during a short-arc process and that are sampled to determine R_stickout. The waveforms span consecutive short-circuit and arc periods (also referred to as non-pulsed and pulse periods). During the short-arc period, voltage V is zero or near zero, while current I forms a pinch-off pulse. Method 400 collects a large number of current values and corresponding time derivative values (collectively "samples") at a high sample rate across multiple short-circuit and arc periods. The samples may be taken during waveform segments that have low and high current values and relatively low time derivative values, for example. The samples may also be taken across rising and falling edges that have relatively high time derivative values, for example. Method 400 searches across the large number of samples for pairs of samples that meet the above-described time derivative and current value criteria. The sample pairs may fall anywhere on the waveforms, provided they meet the criteria.

In the non-limiting example of FIG. 5, shortly after the short-circuit period starts, and just before the pinch-off pulse starts, method 400 identifies a first sample sample_1 while current I is low and di/dt is near zero. Then, during the pinch-off pulse, method 400 collects and identifies a second sample sample_2 while the pinch-off pulse has leveled-off to a peak such that current I is high and di/dt is again near zero. The time window over which method 400 establishes sample_1 and sample_2 ensures that the two samples have similar values of di/dt, but different values of current. Method 400 determines R_stickout using the two samples. In an example, assume sample_1 and sample_2 have current values 55A and 330A and voltage values 0.7V and 4.1V, respectively. Then, delta_u/delta_i = 3.4/275 = 12.3 mOhm. As mentioned above, many other suitable pairs of samples may be identified across the waveform segments.

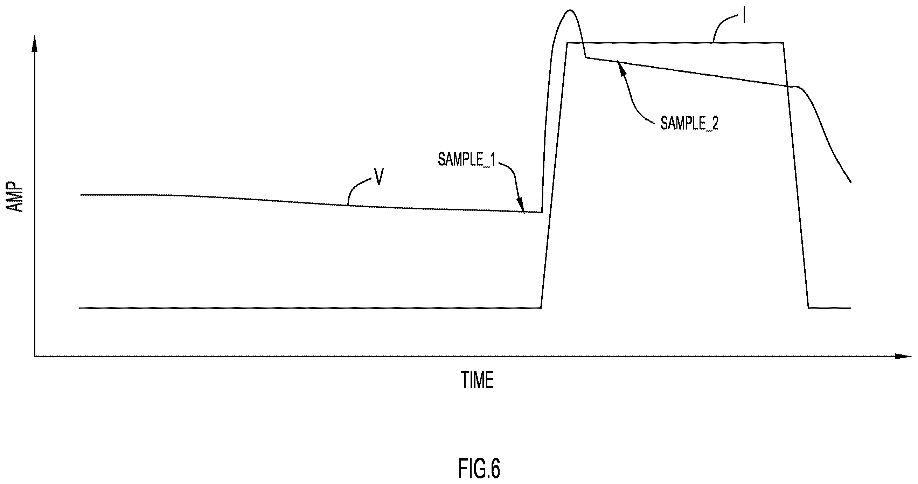

FIG. 6 shows example waveforms for current I and voltage V during a pulse-type process and that are sampled to determine R_stickout. The waveforms span a pulse arc period (e.g., 100 msec). Initially, current I and di/dt are both relatively low. In the non-limiting example of FIG. 6, just before a current pulse starts, while current I and di/dt are both low, method 400 collects and identifies a first sample sample_1. Then, after the current pulse has started and leveled off at a high level, method 400 identifies a second sample sample_2. Sample_1 and sample_2 have similar values of di/dt, but different values of current. In an example, sample_1 and sample_2 may be separated by 1 msec. Method 400 determines R_stickout using the two samples. As mentioned in connection with FIG. 5, many other suitable pairs of samples may be identified across the waveform segments of FIG. 6.

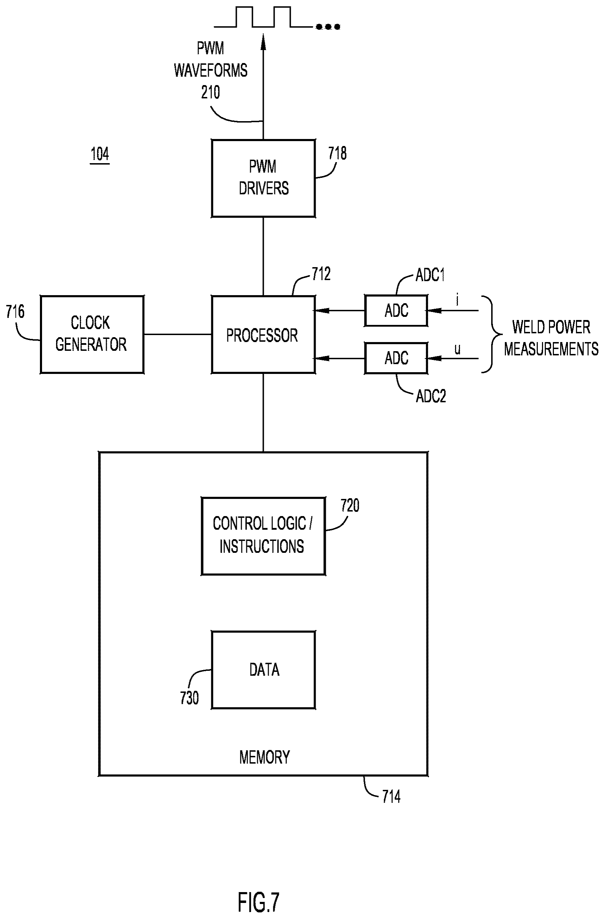

FIG. 7 is a block diagram of PSC 104 (also referred to as a "controller") according to an embodiment. As mentioned above, PSC 104 receives the weld power measurements (e.g., sensed current i and sensed voltage u) and generates PWM waveforms 210 based in part on the weld power measurements. PSC 104 may include an analog-to-digital converter (ADC) ADC1, an ADC ADC2, a processor 712 (e.g., a microcontroller) (which may be implemented in hardware, software, or a combination thereof), a memory 714, a clock generator 716, and PWM drivers 718 coupled with each other. Clock generator 716 generates a clock signal (e.g., a clock waveform that cycles on and off) and timing signals used to drive other components of PSC 104. ADC1 samples current i to produce digitized current samples or values of current i (i.e., current values), and provides the same to processor 712. Similarly, ADC2 samples voltage u to produce digitized voltage values of voltage u (i.e., voltage values), and provides the same to processor 712. ADC1 and ADC2 may produce the current values and the voltage values at a sample rate in the MHz range, for example. Together, the current values and the voltage values represent the weld power measurements in digitized form, and provide real-time feedback from the welding process. The current values and the voltage values may also be referred to as "current samples" and "voltage samples," respectively. In some arrangements, ADC1 and ADC2 may be external to PSC 104.

Memory 714 stores non-transitory computer readable program instructions/control logic 720 that, when executed by processor 712, cause the controller to perform the operations described herein. Processor 712 executes control logic 720 to generate and control PWM waveforms 210 based on the weld power measurements (e.g., the current values and the voltage values), and to perform operations described herein. Processor 712 provides PWM waveforms 210 to power supply 102 through PWM drivers 718.

Memory 714 also stores data 730 used and produced by processor 712. In embodiments, components of PSC 104, including the ADCs, the processor, the memory, the clock generator, and the PWM drivers, may include electronic circuitry such as, for example, programmable logic circuitry, field-programmable gate arrays (FPGAs), programmable logic arrays (PLAs), a general processor, or a digital signal processor (DSP) configured to store and execute the computer readable program instructions, which may include microcode, firmware, and so on.

As used herein, the term "connected to" (and similarly "coupled to"), unless specified otherwise, covers an arrangement in which components or terminals/nodes are directly connected to each other, and an arrangement in which the components or terminals/nodes are indirectly connected to each other through one or more intermediate components.

In some aspects, the techniques described herein relate to a method performed in a welding system that supplies a current and a voltage to a stickout of an electrode from a welding torch during a welding process, including: sampling the current and the voltage to produce current values and voltage values; computing time derivatives of the current that coincide with the current values; determining first and second current values of the current values that differ from each other but that coincide with first and second time derivatives that match each other; computing a delta current between the first and second current values; computing a delta voltage based on first and second voltage values of the voltage values that correspond to the first and second current values; and computing a ratio of the delta voltage to the delta current to represent a resistance of the stickout.

In some aspects, the techniques described herein relate to a method, further including: comparing the first and second time derivatives to each other, wherein determining includes determining that the first and second time derivatives match each other when comparing indicates that a difference between the first and second time derivatives is less than a threshold difference.

In some aspects, the techniques described herein relate to a method, wherein: the welding process includes a short-arc process.

In some aspects, the techniques described herein relate to a method, wherein: the welding process includes a pulsed process.

In some aspects, the techniques described herein relate to a method, wherein: computing each time derivative includes computing each time derivative based on the current values and to coincide with a corresponding current value of the current values.

In some aspects, the techniques described herein relate to a method, wherein: computing the delta current includes computing a difference between the first and second current values.

In some aspects, the techniques described herein relate to a method, wherein: computing the delta voltage includes computing a difference between the first and second voltage values.

In some aspects, the techniques described herein relate to a method, further including: compensating the first and second voltage values to account for one or more of inductive and resistive voltage losses of cabling that conveys the electrode and the current and the voltage to the welding torch, to produce compensated first and second voltage values, wherein computing the delta voltage includes computing the delta voltage using the compensated first and second voltage values.

In some aspects, the techniques described herein relate to a method, wherein: compensating includes compensating the first and second voltage values to account for an inductive voltage loss of the cabling, to produce inductance compensated first and second voltage values, wherein computing the delta voltage includes computing the delta voltage using the inductance compensated first and second voltage values.

In some aspects, the techniques described herein relate to a method, wherein: compensating includes compensating the first and second voltage values to account for a resistive voltage loss of the cabling, to produce resistance compensated first and second voltage values, wherein computing the delta voltage includes computing the delta voltage using the resistance compensated first and second voltage values.

In some aspects, the techniques described herein relate to a method, further including: advancing the electrode as a consumable electrode through the welding torch toward a workpiece such that a portion of the consumable electrode that extends from an end of the welding torch includes the stickout.

In some aspects, the techniques described herein relate to an apparatus including: a power supply to supply a current and a voltage to a stickout of an electrode from a welding torch during a welding process; and a controller configured to perform: sampling the current and the voltage to produce current values and voltage values; computing time derivatives of the current that coincide with the current values; determining first and second current values of the current values that differ from each other but that coincide with first and second time derivatives that match each other; computing a delta current between the first and second current values; computing a delta voltage based on first and second voltage values of the voltage values that correspond to the first and second current values; and computing a ratio of the delta voltage to the delta current to represent a resistance of the stickout.

In some aspects, the techniques described herein relate to an apparatus, wherein the controller is further configured to perform: comparing the first and second time derivatives to each other, wherein the controller is configured to perform determining by determining that the first and second time derivatives match each other when comparing indicates that a difference between the first and second time derivatives is less than a threshold difference.

In some aspects, the techniques described herein relate to an apparatus, wherein: the welding process includes a short-arc process.

In some aspects, the techniques described herein relate to an apparatus, wherein: the welding process includes a pulsed process.

In some aspects, the techniques described herein relate to an apparatus, wherein: the controller is configured to perform computing each time derivative by computing each time derivative based on the current values and to coincide with a corresponding current value of the current values.

In some aspects, the techniques described herein relate to an apparatus, wherein: the controller is configured to perform computing the delta current by computing a difference between the first and second current values.

In some aspects, the techniques described herein relate to an apparatus, wherein: the controller is configured to perform computing the delta voltage by computing a difference between the first and second voltage values.

In some aspects, the techniques described herein relate to an apparatus, wherein the controller is further configured to perform: compensating the first and second voltage values to account for one or more of inductive and resistive voltage losses of cabling that conveys the electrode and the current and the voltage to the welding torch, to produce compensated first and second voltage values, wherein the controller is configured to perform computing the delta voltage by computing the delta voltage using the compensated first and second voltage values.

In some aspects, the techniques described herein relate to an apparatus, wherein: the controller is configured to perform compensating by compensating the first and second voltage values to account for an inductive voltage loss of the cabling, to produce inductance compensated first and second voltage values; and the controller is further configured to perform computing the delta voltage by computing the delta voltage using the inductance compensated first and second voltage values.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

**Claims**

1. A method performed in a welding system that supplies a current and a voltage to a stickout of an electrode from a welding torch during a welding process, comprising:

   sampling the current and the voltage to produce current values and voltage values;
   computing time derivatives of the current that coincide with the current values;
   determining first and second current values of the current values that differ from each other but that coincide with first and second time derivatives that match each other;
   computing a delta current between the first and second current values;
   computing a delta voltage based on first and second voltage values of the voltage values that correspond to the first and second current values; and
   computing a ratio of the delta voltage to the delta current to represent a resistance of the stickout.

2. The method of claim 1, further comprising:

   comparing the first and second time derivatives to each other,
   wherein determining includes determining that the first and second time derivatives match each other when comparing indicates that the first and second time derivatives differ by less than a difference threshold.

3. The method of claim 2, wherein:

the welding process includes a short-arc process; or
the welding process includes a pulsed process.

4. The method of claim 1, wherein:

computing each time derivative includes computing each time derivative based on the current values and to coincide with a corresponding current value of the current values; or
computing the delta current includes computing a difference between the first and second current values; or
computing the delta voltage includes computing a difference between the first and second voltage values.

5. The method of claim 1, further comprising:

compensating the first and second voltage values to account for one or more of inductive and resistive voltage losses of cabling that conveys the electrode and the current and the voltage to the welding torch, to produce compensated first and second voltage values,
wherein computing the delta voltage includes computing the delta voltage using the compensated first and second voltage values.

6. The method of claim 5, wherein:

compensating includes compensating the first and second voltage values to account for an inductive voltage loss of the cabling, to produce inductance compensated first and second voltage values,
wherein computing the delta voltage includes computing the delta voltage using the inductance compensated first and second voltage values.

7. The method of claim 5, wherein:

compensating includes compensating the first and second voltage values to account for a resistive voltage loss of the cabling, to produce resistance compensated first and second voltage values,
wherein computing the delta voltage includes computing the delta voltage using the resistance compensated first and second voltage values.

8. The method of claim 1, further comprising:
advancing the electrode as a consumable electrode through the welding torch toward a workpiece such that a portion of the consumable electrode that extends from an end of the welding torch includes the stickout.

9. An apparatus comprising:

a power supply to supply a current and a voltage to a stickout of an electrode from a welding torch during a welding process; and
a controller configured to perform:

sampling the current and the voltage to produce current values and voltage values;
computing time derivatives of the current that coincide with the current values;
determining first and second current values of the current values that differ from each other but that coincide with first and second time derivatives that match each other;
computing a delta current between the first and second current values;
computing a delta voltage based on first and second voltage values of the voltage values that correspond to the first and second current values; and
computing a ratio of the delta voltage to the delta current to represent a resistance of the stickout.

10. The apparatus of claim 9, wherein the controller is further configured to perform:

comparing the first and second time derivatives to each other,
wherein the controller is configured to perform determining by determining that the first and second time derivatives match each other when comparing indicates that the first and second time derivatives differ by less

9

than a difference threshold.

11. The apparatus of claim 10, wherein:

the welding process includes a short-arc process; or
the welding process includes a pulsed process.

12. The apparatus of claim 9, wherein:
the controller is configured to perform computing each time derivative by computing each time derivative based on the current values and to coincide with a corresponding current value of the current values.

13. The apparatus of claim 9, wherein:

the controller is configured to perform computing the delta current by computing a difference between the first and second current values; or
the controller is configured to perform computing the delta voltage by computing a difference between the first and second voltage values.

14. The apparatus of claim 9, wherein the controller is further configured to perform:

compensating the first and second voltage values to account for one or more of inductive and resistive voltage losses of cabling that conveys the electrode and the current and the voltage to the welding torch, to produce compensated first and second voltage values,
wherein the controller is configured to perform computing the delta voltage by computing the delta voltage using the compensated first and second voltage values.

15. The apparatus of claim 14, wherein:

the controller is configured to perform compensating by compensating the first and second voltage values to account for an inductive voltage loss of the cabling, to produce inductance compensated first and second voltage values; and
the controller is further configured to perform computing the delta voltage by computing the delta voltage using the inductance compensated first and second voltage values.

FIG.1

FIG.2

ANODE CATHODE VOLTAGE DROP

u_an_cat

u_arc

u_stickout

WELDING TORCH
110

111
118

ARC

WORKPIECE
114

100

CABLE ASSEMBLY
108

u_cable
(INDUCTIVE AND RESISTANCE VOLTAGE DROP OF WELD CABLING)

115

u_ps (u_an_cat + u_arc + u_stickout + u_cable)

ELECTRODE

FEEDER
116

118

ELECTRODE FEEDER
106

COIL
120

GAS

112

130a

130b

+

−

POWER SUPPLY (PS)
102

POWER SUPPLY CONTROLLER (PSC)
104

CONTROL MODULE (CM)

HMI

105

FIG.3

400

```
┌─────────────────────────────────────────────────────┐
│  SAMPLING (WELD) CURRENT AND (WELD) VOLTAGE SUPPLIED  │  402
│  TO AN ELECTRODE STICKOUT EXTENDING FROM A WELDING    │
│  TORCH, TO PRODUCE CURRENT VALUES AND VOLTAGE VALUES   │
└─────────────────────────────────────────────────────┘
                          │
                          ▼
┌─────────────────────────────────────────────────────┐
│       COMPUTING TIME DERIVATIVES OF THE CURRENT       │  404
│          (I.E., CURRENT DERIVATIVE VALUES) THAT       │
│            COINCIDE WITH THE CURRENT VALUES           │
└─────────────────────────────────────────────────────┘
                          │
                          ▼
┌─────────────────────────────────────────────────────┐
│ DETERMINING FIRST AND SECOND CURRENT VALUES THAT DIFFER│  406
│ FROM EACH OTHER BUT THAT COINCIDE WITH FIRST AND SECOND│
│        TIME DERIVATIVES THAT MATCH EACH OTHER          │
└─────────────────────────────────────────────────────┘
                          │
                          ▼
┌─────────────────────────────────────────────────────┐
│          COMPUTING A DELTA CURRENT BETWEEN            │  408
│          THE FIRST AND SECOND CURRENT VALUES          │
└─────────────────────────────────────────────────────┘
                          │
                          ▼
┌─────────────────────────────────────────────────────┐
│          COMPUTING A DELTA VOLTAGE BASED ON           │  410
│           FIRST AND SECOND VOLTAGE VALUES OF          │
│         THE VOLTAGE VALUES THAT CORRESPOND TO         │
│           THE FIRST AND SECOND CURRENT VALUES         │
└─────────────────────────────────────────────────────┘
                          │
                          ▼
┌─────────────────────────────────────────────────────┐
│        COMPUTING A RATIO OF THE DELTA VOLTAGE TO      │  412
│         THE DELTA CURRENT TO REPRESENT A             │
│         RESISTANCE OF THE ELECTRODE STICKOUT          │
└─────────────────────────────────────────────────────┘
```

FIG.4

SHORT-CIRCUIT

ARC

I

V

SAMPLE_1

SAMPLE_2

AMP

TIME

FIG.5

EP 4 721 904 A1

FIG.6

EP 4 721 904 A1

FIG.7

Europäisches
Patentamt
European
Patent Office
Office européen
des brevets

# EUROPEAN SEARCH REPORT

**Application Number**

EP 25 20 4723

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2010/200553 A1 (K. YAMAZAKI ET AL) 12 August 2010 (2010-08-12) * paragraphs [0092] - [0104]; claims; figures * | 1-15 | INV. B23K9/095 B23K9/173 |
| A | US 2014/367370 A1 (HUTCHISON RICHARD MARTIN [US] ET AL) 18 December 2014 (2014-12-18) * paragraphs [0023] - [0029]; claims; figures * | 1,9 | |
| A | US 2008/237196 A1 (K. YAMAZAKI ET AL) 2 October 2008 (2008-10-02) * paragraph [0033]; claims; figures; example 1 * | 1,9 | |

**TECHNICAL FIELDS SEARCHED (IPC)**

B23K

The present search report has been drawn up for all claims

| Place of search | Date of completion of the search | Examiner |
|---|---|---|
| Munich | 27 February 2026 | Jeggy, Thierry |

EPO FORM 1503 03.82 (P04C01)

## ANNEX TO THE EUROPEAN SEARCH REPORT
## ON EUROPEAN PATENT APPLICATION NO.

EP 25 20 4723

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2026

| Patent document cited in search report | Publication date | Patent family member(s) | | Publication date |
|---|---|---|---|---|
| US 2010200553 A1 | 12-08-2010 | CN | 101804495 A | 18-08-2010 |
| | | EP | 2218537 A1 | 18-08-2010 |
| | | JP | 5199910 B2 | 15-05-2013 |
| | | JP | 2010184256 A | 26-08-2010 |
| | | KR | 20100092386 A | 20-08-2010 |
| | | TW | 201039965 A | 16-11-2010 |
| | | US | 2010200553 A1 | 12-08-2010 |
| US 2014367370 A1 | 18-12-2014 | AU | 2014278502 A1 | 26-11-2015 |
| | | BR | 112015031305 A2 | 25-07-2017 |
| | | CA | 2912182 A1 | 18-12-2014 |
| | | CN | 105307808 A | 03-02-2016 |
| | | EP | 3007849 A1 | 20-04-2016 |
| | | JP | 2016521641 A | 25-07-2016 |
| | | KR | 20160019467 A | 19-02-2016 |
| | | MX | 348871 B | 03-07-2017 |
| | | US | 2014367370 A1 | 18-12-2014 |
| | | WO | 2014200825 A1 | 18-12-2014 |
| US 2008237196 A1 | 02-10-2008 | CN | 101274384 A | 01-10-2008 |
| | | JP | 4857163 B2 | 18-01-2012 |
| | | JP | 2008246524 A | 16-10-2008 |
| | | KR | 20080088471 A | 02-10-2008 |
| | | TW | 200918230 A | 01-05-2009 |
| | | US | 2008237196 A1 | 02-10-2008 |

EPO FORM P0459

For more details about this annex : see Official Journal of the European Patent Office, No. 12/82